Europäisches Patentamt

European Patent Office

Office européen des brevets

(11) Veröffentlichungsnummer: **0 257 362**
**A1**

## (12) EUROPÄISCHE PATENTANMELDUNG

(21) Anmeldenummer: 87111194.4

(22) Anmeldetag: 03.08.87

(51) Int. Cl.4: **G06F 7/50**

(30) Priorität: 27.08.86 DE 3629011

(43) Veröffentlichungstag der Anmeldung:
02.03.88 Patentblatt 88/09

(84) Benannte Vertragsstaaten:
AT BE CH DE FR GB IT LI LU NL SE

(71) Anmelder: **Siemens Aktiengesellschaft Berlin
und München**
**Wittelsbacherplatz 2**
**D-8000 München 2(DE)**

(72) Erfinder: **Stölzle, Anton, Dipl.-Ing**
**Fasanenstrasse 28**
**D-8025 Unterhaching(DE)**

(54) **Addierer.**

(57) Der Addierer arbeitet nach dem carry-select Prinzip. Er sieht die Übertragung von zwei Übertragssignalen (c-0, c-1) vor, jedoch nur einen Halbaddierer (HA1) zur Bildung des Summensignals. Jede Addierstufe (AS) des Addierers besteht aus einer Anfangsaddierzelle (AZA) und mehreren Normaladdierzellen (AZN). Die Anfangsaddierzelle (AZA) erzeugt aus zugeführten Operandenbit (a, b) ein Summensignal (s) unter Verwendung eines der zwei Übertragssignale (c-0, c-1) und eines Auswahlsignals (e), die jeweils von der nächst niederwertigeren Addierstufe geliefert werden oder fest eingestellt sind. Die Normaladdierzellen (AZN) erzeugen aus den ihnen zugeführten Operandenbits ein Summensignal unter Verwendung eines von zwei durch das Auswahlsignal (e) ausgewählten von der nächst niederwertigeren Addierzelle gelieferten Übertragssignale (c-0, c-1). Die Anfangsaddierzelle (AZA) und die Normaladdierzellen (AZN) unterscheiden sich nur durch die Übertragsnetzwerke (CSA, CSN), die Manchester-Carry Ketten zur Erzeugung oder Übertragung der beiden Übertragssignale (c-0, c-1) verwenden. Die Addierzellen sind gleichartig aufgebaut und eignen sich besonders als Basiszellen für die Erzeugung von Addierern nach dem CAD Verfahren.

## FIG 2

EP 0 257 362 A1

## Addierer

Die Erfindung bezieht sich auf einen Addierer gemäß dem Oberbegriff des Patentanspruchs 1.

Es sind verschiedene Addiererkonzepte bekannt geworden. Prinzipiell kommen für ein Bitslice-Konzept folgende Addierertypen in Frage:

Carry-Ripple Addierer, Carry-Look-Ahead Addierer, Carry-Bypass Addierer, Carry-Select Addierer. Die Funktion dieser Addierer ist z.B. aus den US-PS 3 993 891 und 3 316 393 bekannt. Auf deren Funktionsweise braucht darum nicht weiter eingegangen zu werden.

Die der Erfindung zugrundeliegende Aufgabe besteht darin, einen Addierer der eingangs angegebenen Art anzugeben, dessen zu realisierende Struktur möglichst regulär ist, wobei die einzelnen Addierzellen nicht zu verschieden in der Größe des Lay-Outs sein dürfen.

Diese Aufgabe wird bei einem Addierer der eingangs angegebenen Art durch die kennzeichnenden Merkmale des Anspruchs 1 gelöst.

Weiterbildungen der Erfindung ergeben sich aus den Unteransprüchen.

Der erfindungsgemäße Addierer hat folgende Vorteile:

Sein Schaltungsumfang ist sehr gering;

die Zeit für die Summenbildung ist klein;

die zu realisierende Struktur ist regulär, zum Datenpfad bestehen kaum Querverbindungen;

es gibt nur zwei verschieden aufgebaute Addierzellen, die sehr ähnlich sind;

die angegebenen Addierzellen lassen sich sehr leicht als Basiszellen für ein Chipgenerator-Konzept verwenden.

Anhand eines Ausführungsbeispiels wird die Erfindung weiter erläutert. Es zeigen

Fig. 1 ein Blockschaltbild des Addierers,

Fig. 2 ein Blockschaltbild einer Addierstufe,

Fig. 3 den Aufbau der Anfangsaddierzelle,

Fig. 4 den Aufbau der Normaladdierzelle.

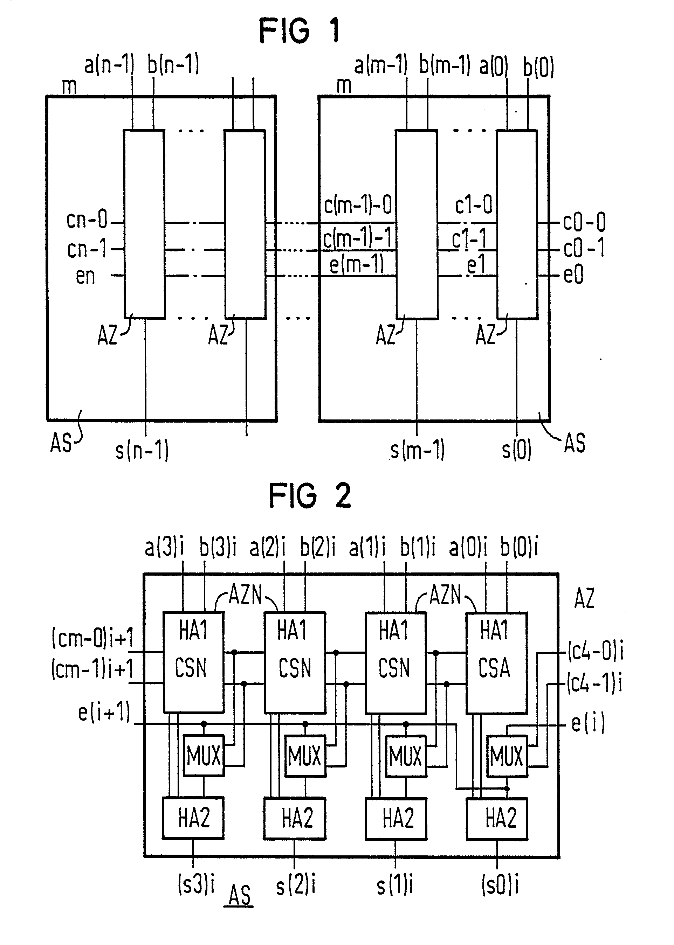

Fig. 1 zeigt ein Blockschaltbild des Addierers. Dieser besteht aus Addierstufen AS, die jeweils m Bit zweier zu verknüpfender Operanden verarbeiten. Unter der Voraussetzung, daß die Operandenbreite n Bit ist, sind n/m Addierstufen erforderlich.

Durch den Addierer werden zwei Operanden a und b miteinander verknüpft zu einer Summe s. Der bei der Addition auftretende Übertrag wird mit c bezeichnet.

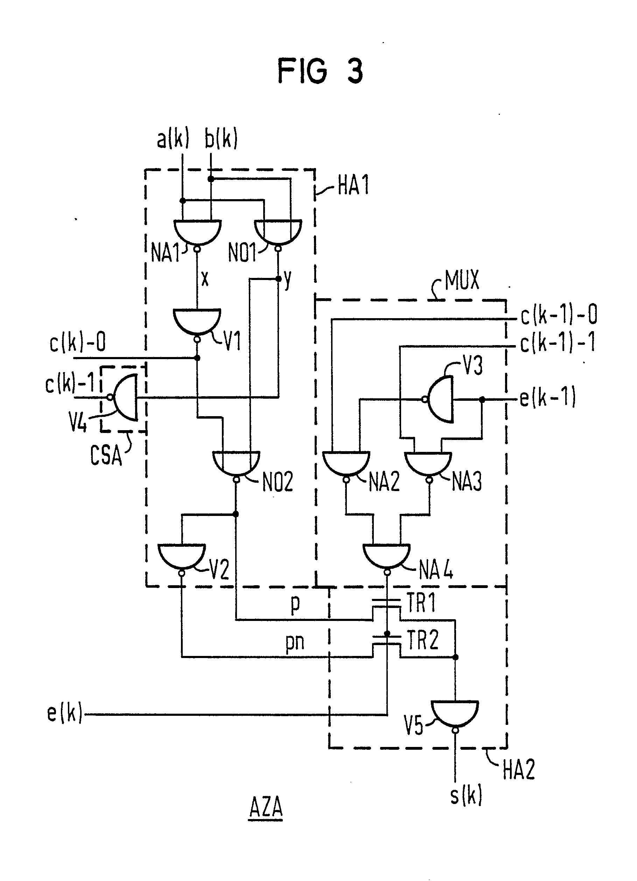

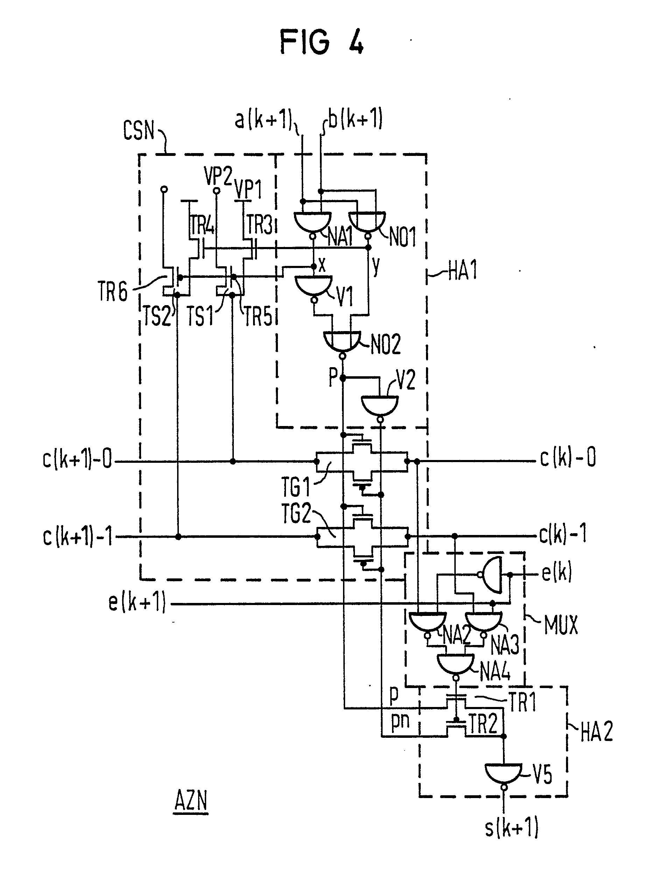

Bei der Beschreibung soll im folgenden davon ausgegangen werden, daß jede Addierstufe AS Teiloperanden von 4 Bit verknüpft. Eine derartige Addierstufe ist in Fig. 2 dargestellt. Sie besteht aus vier Addierzellen AZ. Jede Addierzelle verarbeitet jeweils ein Bit der zu verknüfenden Operanden a und b und erzeugt ein Bit s der Ergebnissumme. Von den vier Addierzellen AZ sind drei Addierzellen, nämlich die Addierzellen AZN, gleich aufgebaut, während die niederwertigste Addierzelle, nämlich die Addierzelle AZA anders als die normalen Addierzellen AZN realisiert ist. Der genaue Aufbau der Addierzelle AZN ergibt sich aus Fig. 3, der genaue Aufbau der normalen Addierzellen AZN aus Fig. 4.

In Fig. 2 werden der i-ten (i = 1,2 ... n/m) Addierstufe Übertragsignale (C4-0)i und (C4-1)i zugeführt, die nach dem Carry-Select Prinzip dazu verwendet werden, um eines der in der Addierzelle erzeugten Ergebnisse als Summensignal zum Ausgang durchzuschalten. Die Auswahl eines der Übertragssignale wird mit Hilfe eines Auswahlsignals e(i) getroffen. Die erste Addierzelle AZA erzeugt ebenfalls zwei Übertragssignale für die nächst angeordnete Normaladdierzelle AZN. Diese Übertragssignale werden auch bei dieser Zelle dazu verwendet, um eines der in der Addierzelle erzeugten Summensignale zum Ausgang durchzuschalten. Die Auswahl zwischen den Übertragssignalen trifft wiederum ein Auswahlsignal, e(i + 1).

Die Funktion der Addierzellen AZ und damit der Addierstufe wird näher unter Zuhilfenahme der Fig. 3 und 4 erläutert.

Fig. 3 zeigt den Aufbau der Anfangsaddierzelle. Diese besteht aus einem ersten Halbaddierer HA1, einem Multiplexer MUX, einem zweiten Halbaddierer HA2 und einem Übertragnetzwerk CSA. Dem ersten Halbaddierer HA1 werden die Operandenbits a und b zugeführt, und zwar einem NAND-Glied NA1 und einen NOR-Glied NO1. Diese erzeugen gemäß der Tabelle auf Seite 7 aus den Operandenbits a und b die Signale x und y. Das Signal x wird über einen Inverter V1 geführt und gelangt zusammen mit dem Signal y zu einem NOR Glied NO2. Am Ausgang des NOR Gliedes NO2 wird das Signal p bzw. invertiert über den Inverter V2 das Signal pn abgegeben. Die Werte von x, y, p, pn sind der Tabelle zu entnehmen. Eines der von dem Halbaddierer HA1 abgegebenen Signale p bzw. pn ist das richtige Ergebnis. Die Auswahl erfolgt mit Hilfe der der Addierzelle AZA zugeführten Übertragssignale c-0 und c-1. Diese Übertragssignale können von einer vorhergehenden Addierstufe stammen bzw. sie können bei der niederwertigsten Addierstufe fest eingestellt sein. Im letzteren Falle wird c-0 binär 0 und c-1 binär 1 gewählt.

Die Auswahl darüber, welches der Übertragsignale c-0 oder c-1 zur Durchschaltung der Signale p oder pn verwendet wird, wird mit dem Multiplexer MUX unter Verwendung eines Auswahlsignals e getroffen. Dieses Auswahlsignal e wird entweder von der nächst niederwertigen Addierstufe oder unter der Voraussetzung, daß die Addierstufe die niederwertigste ist, fest auf binär 0 eingestellt. Der Multiplexer besteht aus 3 NAND-Gliedern NA2, NA3, NA4 und einen Inverter V3.

Mit Hilfe einer zweiten Halbaddierstufe HA2 wird eines der Signale p oder pn als Summensignal s zum Ausgang der Addierzelle durchgeschaltet. Der zweite Halbaddierer HA2 besteht dazu aus einem Transistor TR1, einem komplementär ausgeführten Transistor TR2 und einem Inverterglied V5. Am Ausgang des Invertergliedes V5 erscheint das Summensignal s.

Wenn das Auswahlsignal e binär 0 ist, dann bestimmt das Übertragssignal c-0, welches der Signale p bzw. pn nach Invertierung als Summensignal verwendet wird. Ist dabei c-0 binär 0, dann wird p durchgeschaltet, ist das Übertragssignal c-0 binär 1, dann wird p durchgeschaltet.

Wenn das Auswahlsignal e binär 1 ist, dann bestimmt das Übertragssignal c-1. Ist c-1 binär 0, dann wird das Signal pn durchgeschaltet, ist das Übertragssignal c-1 binär 1, dann wird das Signal p durchgeschaltet.

Das Durchschalten erfolgt somit entweder über den Transistor TR1 oder über den Transistor TR2 in Abhängigkeit des Multiplexerausgangssignals vom Multiplexer MUX. Dieses Multiplexerausgangssignal wird weiterhin als Auswahlsignal für die übrigen Addierzellen der Addierstufe verwendet.

Das Übertragsnetzwerk CSA besteht in Fig. 3 lediglich aus einem Inverter V4. Der Grund liegt darin, weil im Halbaddierer HA1 erzeugte Signale zur Bildung der Übertragssignale für die nächste Addierzelle herangezogen werden können. Das Übertragssignal c-0 für die nächste Zelle, eine Normaladdierzelle AZN, wird durch UND-Verknüpfung der Operandenbits a und b gebildet, das Übertragssignal c-1 durch ODER-Verknüpfung der Operandenbits a und b.

In Fig. 3 ist die Anfangsaddierzelle für die k-operandenbits, wobei k = 1, 2 usw. ist, gezeigt. Dementsprechend sind die Übertragssignale, die der Anfangsaddierzelle zugeführt werden, mit c (k-1)-0 und c(k-1)-1, das Auswahlsignal e(k-1) und das Summensignal mit s(k) bezeichnet. Die Übertragssignale für die nächste Addierzelle, die eine Normaladdierzelle sein muß, sind mit c(k)-0, c(k)-1 und das Auswahlsignal für die übrigen Normaladdierzellen der Addierstufe mit e(k) benannt.

Die in Fig. 3 angegebenen Signale p und pn stellen nach der Tabelle die EXKLUSIV-ODER Verknüpfung der Operandenbits a und b für p und invertiert für pn dar. Das Signal x stellt die NAND-Verknüpfung der Operandenbits a und b, das Signal y die NOR-Verknüpfung der Operandenbits a und b dar.

Aus Fig. 4 ergibt sich der Aufbau der Normaladdierzelle AZN. Im Vergleich zur Anfangsaddierzelle besteht lediglich ein Unterschied im Übertragsnetzwerk CSN und in der Bildung des Auswahlsignals e-(k+1). Die Halbaddierer HA1 und HA2 und die Multiplexerschaltung MUX sind genauso aufgebaut wie bei der Anfangsaddierzelle AZA.

Mit Hilfe des Halbaddierers HA1 wird wiederum aus dem Operandenbits a und b die Signale p und pn gewonnen, zusätzlich die Signale x und y. Die erforderlichen Werte ergeben sich aus der Tabelle. Mit Hilfe der Multiplexerschaltung MUX und dem Auswahlsignal e(k) wird wie bei der normalen Addierzelle AZA entweder abhängig vom Übertragssignal c(k)-0 oder c(k)-1 entschieden, ob p oder pn als Summensignal s-(k+1) nach Invertierung verwendet wird.

Zum Unterschied zur Anfangsaddierzelle AZA wird das Auswahlsignal für die folgenden Normaladdierzellen nicht neu gebildet, sondern lediglich weitergeleitet.

Der wesentliche Unterschied zur Anfangsaddierzelle besteht jedoch darin, daß das Übertragsnetzwerk CSN und damit die Überträge c(k+1)-0 und c(k+1)-1 völlig anders gebildet werden als bei der Anfangsaddierzelle. Wenn nämlich das Signal p vom Halbaddierer HA1 binär 1 ist, dann werden die Übertragssignale c(k)-0 und c(k)-1 von der vorhergehenden Addierzelle über Transfergatter TG1 bzw. TG2 einfach weitergeleitet. Ist das Signal p dagegen binär 0, dann werden zwei Transistorschaltungen TS1 aus Transistoren Tr3, TR5 und TS2 aus Transistoren TR4, TR6 von den Signalen x und y so angesteuert, daß entweder ein erstes festes Potential VP1 oder ein zweites festes Potential VP2 über die Transistoren an die Leitungen für die Übertragssignale c(k+1)-0 und c(k+1)-1 gelegt werden. Ist also p binär 0 und die Operandensignale a und b sind ebenfalls binär 0, dann wird über die Transistorschaltungen TS1 und TS2 das feste Potential VP1 an die Leitungen für die Übertragssignale gelegt, so daß beide Übertragssignale c(k + 1)-0 und c(k + 1)-1 binär 0 sind. Sind dagegen die Operandensignale a und b binär 1 und p binär 0, dann wird das zweite feste Potential VP2 über die Transistorschaltungen TS1 und TS2 an die Leitungen für die Übertragssignale gelegt. Dann ist c(k + 1)-0 und c(k + 1)-1 binär 1.

Der Addierer arbeitet somit ähnlich wie ein Carry-Select Addierer, verwendet jedoch für die Carry-Bildung eine Manchester-Carry Kette. Zudem ist der für die Summenbildung zuständige erste Halbaddierer HA1 nicht doppelt ausgeführt und damit hardware eingespart. Zum Aufbau jeder Addierstufe sind nur zwei Arten von Addierzellen AZA und AZN notwendig. Dabei unterscheidet sich nur die Anfangsaddierzelle AZA von den übrigen Addierzellen AZN. Die Folge ist, daß ein Addierer oder eine gesamte Funktionsscheibe nur aus zwei verschiedenen Zellen aufgebaut werden muß, daß bei einer vier Bit Addierstufe das Carry-Signal im worst-case nur durch drei Manchester-Carry Stufen wandern muß, um zum Ausgang der Addierstufe zu gelangen, und daß nur ein Multiplexer pro Addierzelle notwendig ist.

Tabelle

| a | b | p | pn | x | y |
|---|---|---|----|---|---|
| 0 | 0 | 0 | 1  | 1 | 1 |
| 0 | 1 | 1 | 0  | 1 | 0 |
| 1 | 0 | 1 | 0  | 1 | 0 |
| 1 | 1 | 0 | 1  | 0 | 0 |

4 Figuren

7 Patentansprüche

## Ansprüche

1. Addierer zur Verarbeitung von n bit breiten Operanden (a,b) mit Hilfe von n/m Addierstufen von jeweils m bit Verarbeitungsbreite für zugeordnete m bit breite Teiloperanden, **gekennzeichnet** durch folgende Merkmale:

a) jede Addierstufe (AS) besteht aus einer Anfangsaddierzelle (AZA) für die niederwertigsten Bit der zugeordneten Teiloperanden und m-1 Normaladdierzellen (AZN), jeweils eine für die übrigen Bit der zugeordneten Teiloperanden,

b) die Anfangsaddierzelle (AZA) erzeugt

b1) aus den ihr zugeführten Operandenbit ein Summensignal (s) unter Verwendung eines von zwei Übertragssignalen (c-0, c-1),
die außer bei der niederwertigsten Addierstufe von der nächst niederwertigeren Addierstufe geliefert werden, bei der niederwertigsten Addierstufe fest für das eine Übertragssignal auf binär 0 und für das andere Übertragssignal auf binär 1 eingestellt sind,
und deren Auswahl mit Hilfe eines Auswahlsignals (e) erfolgt, das von der nächst niederwertigeren Addierstufe geliefert wird, bei der ersten Addierstufe dagegen fest auf binär 0 eingestellt ist,

b2) aus den ihr zugeführten Operandenbit durch UND-Verknüpfung das eine Übertragssignal (c-0) und durch ODER-Verknüpfung das andere Übertragssignal (c-1) für die nächste benachbarte Normaladdierzelle (AZN),

b3) als Auswahlsignal (e) für die übrigen Normaladdierzellen (AZN) der Addierstufe das zur Addition verwendete Übertragssignal,

c) jede Normaladdierzelle (AZN) erzeugt,

c1) aus den ihr zugeführten Operandenbit ein Summensignal (s) unter Verwendung eines von zwei durch das Auswahlsignal (e) ausgewählten von der nächst niederwer tigeren Addierzelle gelieferten Übertragsignale,

c2) Übertragssignale für die nächste Addierzelle, die identisch den zugeführten Übertragssignalen sind, wenn die zugeführten Operandenbit unterschiedliche Binärwerte haben,

die binär 0 sind, wenn beide Operandenbit binär 0 sind,

die binär 1 sind, wenn beide Operandenbit binär 1 sind.

2. Addierer nach Anspruch 1, **gekennzeichnet** durch die Addierzelle (AZN, AZA)

mit einem ersten Halbaddierer (HA1), der eine EXKLUSIV-ODER Verknüpfung der zugeführten Operandenbit (a, b) durchführt und das Verknüpfungsergebnis invertiert (pn) und nicht invertiert (p) abgibt,

mit einer Multiplexerschaltung (MUX), die in Abhängigkeit dieses Auswahlsignals (e) eines der Übertragssignale (c-0, c-1) zum Multiplexerausgang durchschaltet,

mit einem zweiten Halbaddierer (HA2), der in Abhängigkeit des Multiplexerausgangssignals das Verknüpfungsergebnis (p, pn) als Summensignal (s) zum Addierzellenausgang durchschaltet,

mit einem Übertragnetzwerk (CSA, CSN), das die beiden Übertragssignale (c-0, c-1) für die nächst höherwertigere Addierzelle erzeugt.

3. Addierer nach Anspruch 2, **gekennzeichnet** durch den ersten Halbaddierer

mit einem ersten NAND-Glied (NA1) und einem ersten NOR-Glied (NO1), denen jeweils die zu verknüpfenden Operandenbit (a, b) zugeführt werden,

mit einem zweiten NOR-Glied (NO2), das mit dem Ausgang des ersten NOR-Gliedes (NO1) und über ein erstes Inverter glied (V1) mit dem Ausgang des ersten NAND-Gliedes (NA1) verbunden ist und das das Verknüpfungsergebnis (p) erzeugt,

mit einem zweiten Inverterglied (V2), das mit dem Ausgang des zweiten NOR-Gliedes (NO2) verbunden ist und das Verknüpfungsergebnis (p) in invertierter Form (pn) erzeugt.

4. Addierer nach Anspruch 2 oder 3, **gekennzeichnet** durch den zweiten Halbaddierer (HA2) mit einem ersten Transistor (TR1), dessen vom Multiplexerausgangssignal gesteuerte Strecke zwischen dem zweiten NOR-Glied (NO2) des ersten Halbaddierers und dem Eingang eines dritten Inverters (V5) angeordnet ist,

mit einem zum ersten Transistor (TR1) komplementären Transistor (TR2), dessen vom Multiplexerausgang gesteuerte Strecke zwischem dem Ausgang des zweiten Invertergliedes (V2) des ersten Halbaddierers und dem Eingang des dritten Invertergliedes (V5) angeordnet ist,

mit dem dritten Inverterglied (V5), an dessen Ausgang das Summensignal (s) abgegeben wird.

5. Addierer nach einem der Ansprüche 2 bis 4, **gekennzeichnet** durch die Multiplexerschaltung (MUX)

mit einem zweiten NAND-Glied (NA2), dem das eine Übertragssignal (c-0) und invertiert das Auswahlsignal (e) zugeführt wird,

mit einem dritten NAND-Glied (NA3), dem das andere Übertragsignal (c-1) und das Auswahlsignal (e) direkt zugeführt wird,

mit einem vierten NAND-Glied (NA4), das mit dem Ausgang des zweiten und dritten NAND-Gliedes verbunden ist und das den Multiplexerausgang bildet.

6. Addierer nach einem der Ansprüche 2 bis 5, **gekennzeichnet** durch das Übertragnetzwerk (CSA) mit einem vierten Inverterglied (V4), das mit dem Ausgang des ersten NOR-Gliedes (NO1) und des ersten Halbaddierers verbunden ist und an dessen Ausgang das zweite Übertragssignal (c-1) für die nächste Addierzelle abgegeben wird, während das erste Übertragssignal (c-0) am Ausgang des ersten Invertergliedes (V1) des ersten Halbaddierers abgenommen wird.

7. Addierer nach einem der Ansprüche 2 bis 5, **gekennzeichnet** durch das Übertragsnetzwerk mit einem ersten parallel geschalteten Transistorpaar (TG1) aus komplementären Transistoren, das das erste Übertragssignal (c-0) von der vorhergehenden Addierzelle zur nächsten überträgt,

mit einem parallel geschalteten Transistorpaar (TG2) aus komplementären Transistoren, das das zweite Übertragssignal (c-1) von der vorhergehenden Addierzelle zur nächsten überträgt, wobei jeweils der eine Transistor jedes Transistorpaares (TG1, TG2) vom Verknüpfungsergebnis (p), der andere Transistor jedes Transistorpaares von dem invertierten Verknüpfungsergebnis (pn) des ersten Halbaddierers gesteuert wird,

mit zwei Transistoren (TR3, TR4) des einen Leitungstyps, deren Steuereingang mit dem Ausgang des ersten NOR-Gliedes (NO1) des ersten Halbaddierers verbunden ist und deren gesteuerte Strecke zwischen einem der binären 0 entsprechenden festen Potential (VP1) und der Leitung für die Übertragssignale verbunden ist,

mit zwei Transistoren des anderen Leitungstyps (TR5, TR6), deren Steuereingang mit dem Ausgang des ersten NAND-Gliedes (NA1) verbunden ist und deren gesteuerte Strecken zwischen einem der binären 1 entsprechenden festen Potential (VP2) und den Leitungen für die Übertragssignale verbunden ist.

0 257 362

# FIG 1

# FIG 2

# FIG 3

AZA

# FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 164 450  (N.E.C.)<br>* Abbildung 5; Text * | 1,2,7 | G 06 F    7/50 |
| | --- | | |
| A | EP-A-0 130 397  (SIEMENS)<br>* Abbildungen 1,3; Text * | 1 | |
| | --- | | |
| A | US-A-4 525 797  (MOTOROLA)<br>* Abbildungen 4,7,8,9; Text * | 1 | |
| | ----- | | |

RECHERCHIERTE
SACHGEBIETE (Int. Cl.4)

G 06 F    7/00

Der vorliegende Recherchenbericht wurde für alle Patentansprüche erstellt.

| Recherchenort<br>DEN HAAG | Abschlußdatum der Recherche<br>12-10-1987 | Prüfer<br>NUSSBAUMER C.P. |
|---|---|---|